(19) Europäisches Patentamt
European Patent Office
Office européen des brevets

(11) **EP 0 899 468 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.[7]: **F16B 13/06**, F16B 13/00

(21) Anmeldenummer: **98810511.0**

(22) Anmeldetag: **04.06.1998**

(54) **Hinterschnittdübel**

Undercut anchor

Ancre à contre-dépouille

(84) Benannte Vertragsstaaten:
**CH DE FR GB LI**

(30) Priorität: **16.08.1997 DE 19735709**

(43) Veröffentlichungstag der Anmeldung:
**03.03.1999 Patentblatt 1999/09**

(73) Patentinhaber: **HILTI Aktiengesellschaft**
**9494 Schaan (LI)**

(72) Erfinder:
• **Kaibach, Werner, Dipl. Ing.**
**86807 Buchloe (DE)**

• **Raber, Stefan, Dr.-Ing.**
**86916 Kaufering (DE)**

(74) Vertreter: **Wildi, Roland et al**
**Hilti Aktiengesellschaft**
**Patentabteilung**
**9494 Schaan (LI)**

(56) Entgegenhaltungen:
**EP-A- 0 627 567      US-A- 4 702 654**
**US-A- 4 919 579      US-A- 4 968 200**
**US-A- 5 314 278**

**Beschreibung**

Die Erfindung betrifft einen Hinterschnittdübel gemäss dem Oberbegriff des Patentanspruchs 1.

In der Befestigungstechnik besteht vielfach der Wunsch nach weitgehend spreizdruckfreien Befestigungen. Insbesondere bei geringen Rand- und Achsabständen besteht bei Verankerungen mit konventionellen Spreizdübeln die Gefahr von Rissen und sogar Abplatzern im Untergrund. Für derartige abstandskritische Befestigungen sind Verankerungssysteme bekannt, bei denen ein speziell ausgebildetes Befestigungselement formschlüssig in einer Aufnahmebohrung verankert wird. Dazu wird eine zunächst zylindrisch gebohrte Aufnahmebohrung in einer definierten Tiefe mit einer Hinterschneidung versehen. Das in die vorbereitete Aufnahmebohrung einsetzbare Befestigungselement umfasst eine Ankerstange mit einem sich zum freien Vorderende konusförmig erweiternden Kopfteil und eine Hülse mit durch axiale Schlitze voneinander getrennten, ausstellbaren Spreizsegmenten. Durch eine Relativwerschiebung zwischen der Hülse und der Ankerstange sind die entlang des Kopfteils abgleitenden Spreizsegmente radial in die Hinterschneidung ausstellbar.

Zur Herstellung der Hinterschneidung werden vielfach spezielle Hinterschnittwerkzeuge verwendet, die mit exzentrisch in der Aufnahmebohrung umlaufenden Schneiden ausgestattet sind und in einer vorbestimmten Tiefe fräsend schabend Material von der Wandung der Aufnahmebohrung abtragen, um diese im gewünschten Umfang zu erweitem. Es sind auch Hinterschnittdübel bekannt, die sich während des Setzvorgangs selbsttätig eine Hinterschneidung erzeugen. Dazu sind sie an den radial ausstellbaren Spreizsegmenten mit Schneiden ausgestattet, die bei einem rein axialen Setzvorgang eine Hinterschneidung meisseln oder bei einer Rotation der Hülse während ihres axialen Vortriebs fräsend die Hinterschneidung erzeugen. Ein Beispiel für den zuletzt genannten Typ eines Hinterschnittdübels ist in der US-A-4,702,654 beschrieben. Dieser bekannte Hinterschnittdübel weist eine Ankerstange mit einem Konus und eine relativ dazu axialverschiebbare Hülse mit radial ausstellbaren Spreizsegmenten auf. Die Spreizsegmente erstrecken sich von einem plastischen Gelenk in Richtung des Konus am Vorderende der Ankerstange und sind an ihrer Aussenfläche mit Schneidstiften versehen. Bei der Montage dieses bekannten Hinterschnittdübels stützt sich die Ankerstange am Bohrlochgrund ab. Die Hülse wird drehend auf den Konus aufgetrieben. Dabei werden die Spreizsegmente radial ausgestellt und die Schneidstifte bearbeiten die Wandung der Aufnahmebohrung abrasiv.

Die bekannten Hinterschnittdübel, wie beispielsweise der in der US-A-4,702,654 beschriebene, besitzen Hülsen mit radial ausstellbaren Spreizsegmenten, die in Seitenansicht eine im wesentlichen rechteckige Kontur aufweisen. Nach dem Setzvorgang decken die radial ausgestellten Spreizsegmente nur einen Teil der im Untergrund erstellten Hinterschnittfläche. Besonders augenfällig ist dies an den im wesentlichen rechteckig verlaufenden freien Vorderenden der Spreizlappen, die in axialer Richtung einen Grossteil der kreisförmig verlaufenden Kontur der Hiriterschneidung freilassen. Die senkrecht zum Radius verlaufende Vorderkante der Spreizsegmente erreicht allenfalls mit ihren freien Ecken die Aussenkontur der Hinterschneidung. Zwischen den freien Ecken verläuft die Vorderkante gegenüber der kreisförmigen Aussenkontur der Hinterschneidung wie eine Sekante. Dadurch bleibt ein relativ grosser Teil der Hinterschnittfläche für die Lasteinleitung ungenutzt. Auch am gegenüberliegenden Ende der Spreizlappen, im Bereich des plastischen Gelenks, ergibt sich bei radial ausgestellten Spreizlappen ein Missverhältnis zwischen der Anlagefläche des Spreizlappens und der Hinterschnittfläche der Hinterschneidung. Durch die nur teilweise Nutzung der Hinterschnittfläche sind die erzielbaren Lastwerte kleiner als es aufgrund der radialen Erstreckung der Hinterschneidung möglich wäre.

Aufgabe der vorliegenden Erfindung ist es daher, diesen Nachteilen der bekannten Hinterschnittdübel abzuhelfen. Es soll ein Hinterschnittdübel geschaffen werden, bei dem die in der Hinterschneidung vorhandene Hinterschnittfläche besser für die Lasteinleitung genutzt wird, um die erzielbaren Lastwerte zu verbessern.

Die Lösung dieser Aufgaben besteht in einem Hinterschnittdübel, der die im kennzeichnenden Abschnitt des Patentanspruchs 1 angeführten Merkmale aufweist. Der erfindungsgemässe Hinterschnittdübel umfasst eine Ankerstange, die an ihrem einen Ende ein sich in Setzrichtung konusförmig erweiterndes Kopfteil und am gegenüberliegenden Ende Lastangriffsmittel aufweist, und eine die Ankerstange umgebende Hülse, die an ihrem dem Kopfteil zugewandten Spreizabschnitt mit durch axiale Schlitze voneinander getrennten Spreizsegmenten versehen ist. Die Spreizsegmente erstrecken sich von einem plastischen Gelenk in Richtung des Kopfteils und sind durch eine axiale Relativverschiebung zwischen dem Kopfteil und der Hülse radial ausstellbar. Die freien Vorderkanten der Spreizsegmente sind in Richtung des Kopfteils konvex gekrümmt ausgebildet, wobei die gekrümmten Vorderkanten im vollständig ausgestellten Zustand der Spreizsegmente im wesentlichen Abschnitte eines Kreisbogens bilden. Durch die erfindungsgemässe Ausbildung der Spreizsegmente erstrecken sich ihre freien Vorderkanten nicht mehr als Sekanten zu der kreisförmigen Kontur der Hinterschneidung, sondern sie folgen dieser Kontur weitgehend. Dadurch reichen die Spreizsegmente weiter in die Hinterschneidung hinein und die vorhandene Hinterschnittfläche wird besser für die Lasteinleitung genützt. Somit wird bei gleicher Last die lokale Druckbeanspruchung des Untergrunds verringert oder es kann bei gleichbleibender Druckbeanspruchung die zulässige Last vergrössert werden.

Es erweist sich von Vorteil, wenn der von den gekrümmten Vorderkanten der vollständig radial ausgestellten Spreizsegmente gebildete Kreisbogen weitgehend mit der kreisförmigen Aussenkontur der Hinterschneidung übereinstimmt. Dadurch ist eine besonders gute Anpassung der Geometrie der Spreizsegmente an die Geometrie der Hinterschneidung gewährleistet. Die Spreizsegmente reichen bis zum Übergang der Hinterschnittfläche zur im wesentlichen axial verlaufenden Begrenzungswandung der Hinterschneidung und stützen sich auch in radialer Richtung ab. Die dadurch erhöhte Steifigkeit des Systems erweist sich günstig für dynamische Beanspruchungen des Befestigungspunktes.

Eine besonders gute Übereinstimmung der Geometrien der Spreizsegmente und der erstellten Hinterschneidung ergibt sich, wenn der Verlauf der gekrümmten Vorderkanten der Spreizlappen im wesentlichen der Ellipsengleichung $x^2/a^2 + y^2/b^2 = 1$ entspricht, mit $a = r$ und $b = r \cdot \sin(\alpha)$, wobei r für den Radius, der Hinterschneidung am Übergang der Hinterschnittfläche zur im wesentlichen axial verlaufenden Begrenzungswandung und $\alpha$ den halben mittleren Öffnungswinkel des Kopfteils bezeichnet. Der mittlere halbe Öffnungswinkel des Kopfteils wird gewählt, um auch Kopfteile zu berücksichtigen, deren Öffnungswinkel sich in Setzrichtung verändert, insbesondere grösser wird, wie die beispielsweise bei sich trompetenförmig erweiternden Kopfteilen der Fall ist.

Die geometrische Übereinstimmung der Spreizsegmente und der Hinterschneidung kann noch weiter verbessert werden, indem die Spreizsegmente auch an ihrem Anbindungsbereich am plastischen Gelenk an die geometrischen Verhältnisse im ausgestellten Zustand angepasst werden. Dazu ist die das rückwärtige Ende der Spreizlappen bildende Begrenzungslinie der in der Aussenfläche der Hülse verlaufenden Nut in Richtung der Spreizlappen derart gekrümmt ausgebildet, dass die Begrenzungslinien im vollständig ausgestellten Zustand der Spreizlappen einen Kreisbogen bilden.

Indem der von den rückwärtigen Enden der radial vollständig ausgestellten Spreizsegmente gebildete Kreisbogen einen Radius aufweist, für den gilt $h \leq t \leq 1{,}25\,h$, vorzugsweise $h \leq t \leq 1{,}15\,h$, wobei h für den Radius des Mantels der Hülse (5; 16) steht, kommt der Übergang vom plastischen Gelenk zu den Spreizsegmenten in den Übergangsbereich von der Bohrungswandung zur Hinterschnittfläche zu liegen. Da das plastische Gelenk durch eine Nut in der Aussenwandung der Hülse gebildet ist, kommt die Übergangskante des Untergrunds in den durch die Nut gebildeten Freiraum zu liegen. Die Dübelhülse übt auf diesen Schwachbereich des Untergrundmaterials keinen Druck aus, wodurch das Untergrundmaterial besser geschont wird.

Um die im Untergrund vorhandene Hinterschnittfläche noch besser für die Lasteinleitung. zu nutzen und die Beanspruchung des Untergrundmaterials bei Belastung noch gleichmässiger zu gestalten, ist es von Vorteil, wenn sich benachbarte Spreizsegmente im unverspreizten Ausgangszustand wenigstens über einen Teil ihrer Längserstreckung überdecken. Die Überdeckung ihrer Längsseiten nimmt dabei vom plastischen Gelenk zu den gekrümmten Vorderkanten der Spreizsegmente zu und ist bei radialer Ausstellung der Spreizsegmente verringerbar. Durch die gewählte Überlappung der Spreizsegmente im unverspreizten Ausgangszustand ist gewährleistet, dass sich die Spreizsegmente im vollständig radial ausgestellten Zustand über einen möglichst grossen Teil der Hinterschnittfläche erstrecken. Aufgrund der grösseren nutzbaren Hinterschnittfläche wird bei Belastung die zulässige höchste Flächenpressung erst bei höherer Last erreicht. Indem die Spreizsegmente eine zu ihren gekrümmten Vorderkanten hin zunehmende Überdeckung aufweisen, wird dem Umstand Rechnung getragen, dass sich die Krümmungsradien des Kopfteils zum vorderen Ende hin vergrössern. Entsprechend entfernen sich die Längskanten benachbarter Spreizsegmente beim radialen Ausstellen an den Endbereichen weiter als am plastischen Gelenk. Durch die erfindungsgemäss zum freien Vorderende hin zunehmende Überdeckung wird die über die axiale Erstreckung der Spreizsegmente unterschiedlich weite Entfernung voneinander kompensiert.

Besonders zweckmässig erweist es sich, wenn die Spreizsegmente in ihrer vollständig radial ausgestellten Endlage weitgehend spaltfrei aneinandergrenzen und die Überdeckung benachbarter Spreizsegmente aufgehoben ist. Bei dieser geometrischen Auslegung der Spreizsegmente ist die Weite der zwischen den Spreizsegmenten angeordneten Schlitzen gleich Null. Die ausgestellten Spreizsegmente bilden eine geschlossene Fläche, die die Hinterschnittfläche vollständig überdeckt. Dadurch ist die gesamte Hinterschnittfläche für die Lasteinleitung nutzbar.

Besonders einfach herstellbar ist die erfindungsgemäss ausgebildete Hülse, wenn sie als ein Blechstanzbiegeteil ausgebildet ist. Die Erzeugung der erforderlichen Kontur der Spreizsegmente und des plastischen Gelenks ist dann fertigungstechnisch relativ einfach umsetzbar. Die Form der Spreizsegmente kann beispielsweise gestanzt werden. Falls die Spreizsegmente seitlich verbreitert werden sollen, können sie zusätzlich beispielsweise gewalzt werden. Das plastische Gelenk kann beispielsweise durch Prägen mit der gewünschten Kontur versehen werden.

Die erfindungsgemässe Ausbildung der Spreizsegmente ist für Hinterschnittdübel von Vorteil, die in Bohrungen mit bereits vorbereiteten Hinterschneidungen verankert werden. Sie erweist sich aber besonders auch bei selbstschneidenden Hinterschnittdübeln als zweckmässig, die sich beim Setzvorgang ihre Hinterschneidung selbst erzeugen. Die Spreizsegmente sind dazu mit Schneiden versehen. Durch radiales Ausstellen erzeugen die Spreizsegmente damit eine Hinterschneidung, die möglichst gut an ihre Geometrie angepasst ist und wegen der erfindungsgemässen Ausbildung der Spreizsegmente einen möglichst grossen Teil der Hinterschnittfläche für die Lasteinleitung nutzt.

Im folgenden wird die Erfindung anhand von in den Figuren schematisch dargestellten Ausführungsbeispielen näher erläutert. Es zeigen:

Fig. 1 einen erfindungsgemässen Hinterschnittdübel im unverspreizten Zustand in Seitenansicht;

Fig. 2 eine Abwicklung der Hülse des Hinterschnittdübels aus Fig. 1;

Fig. 3 die Hülse des Hinterschnittdübels gemäss Fig. 1 mit ausgestellten Spreizsegmenten in Seitenansicht;

Fig. 4 eine Draufsicht der Hülse gemäss Pfeil IV in Fig. 3;

Fig. 5 eine Variante des erfindungsgemässen Hinterschnittdübels im unverspreizten Zustand in Seitenansicht; und

Fig. 6 die Hülse des Hinterschnittdübels gemäss Fig. 5 mit ausgestellten Spreizsegmenten in Seitenansicht.

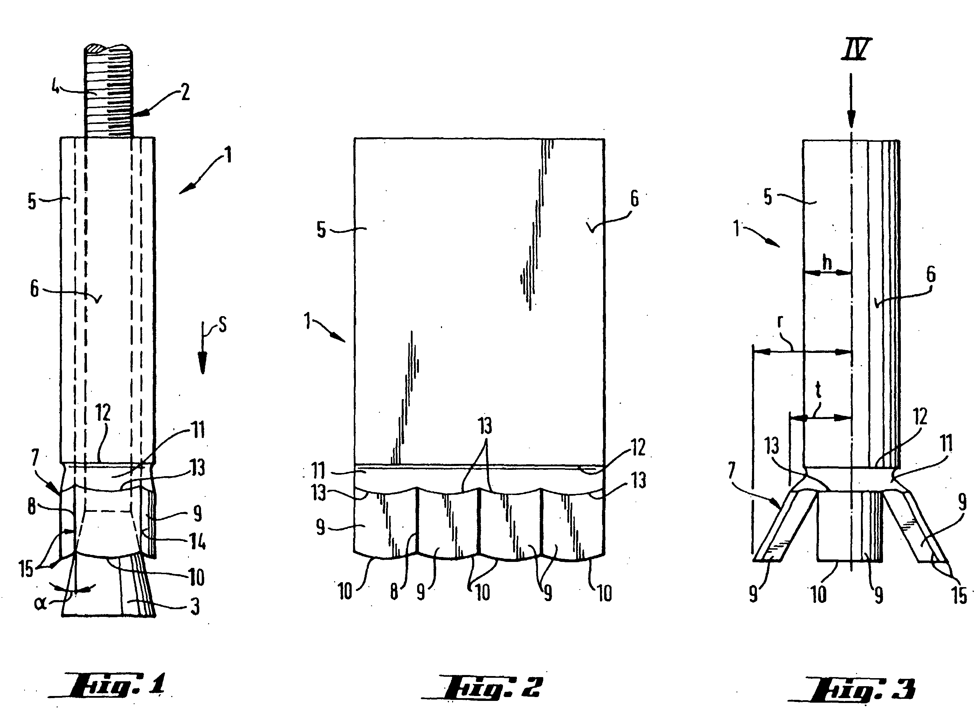

Ein erstes Ausführungsbeispiel des erfindungsgemäss ausgebildeten Hinterschnittdübels ist in Fig. 1 bis 4 in verschiedenen Ansichten und Zuständen dargestellt. Der in Fig. 1 gesamthaft mit dem Bezugszeichen 1 versehene Hinterschnittdübel umfasst eine Ankerstange 2 mit einem Kopfteil 3, das sich in Setzrichtung S konisch erweitert. Am gegenüberliegenden Endabschnitt weist die Ankerstange 2 Lastangriffsmittel 4, beispielsweise ein Aussengewinde, auf. Eine Hülse 5 ist axial verschieblich auf der Ankerstange 2 angeordnet. Die Hülse 5 weist an ihrem dem Kopfteil 3 zugewandten Abschnitt einen Spreizbereich 7 auf, der von durch axial verlaufende Schlitze 8 voneinander getrennten Spreizsegmenten 9 gebildet ist. Die Spreizsegmente 9 erstrecken sich von einem plastischen Gelenk 11, das als eine in der Aussenfläche 6 der Hülse 5 umlaufende Nut ausgebildet ist, in Richtung des Kopfteils 3. Die Spreizsegmente sind radial ausstellbar, indem die Hülse 5 in Setzrichtung S auf das Kopfteil 3 aufgetrieben wird. Falls es sich bei dem Hinterschnittdübel 1 um ein selbstschneidendes System handelt, welches sich beim Setzvorgang selbsttätig eine Hinterschneidung erzeugt, können an den freien Vorderkanten 10 und/oder an den Längsseiten 14 der Spreizsegmente Schneiden 15 vorgesehen sein. Die Schneiden 15 können beispielsweise Hartmetalleinsätze in der Aussenwandung der Spreizsegmente sein. Sie können auch' durch eine Beschichtung der Aussenwandung 6 der Spreizsegmente 9 im Spreizabschnitt 7 gebildet sein oder gehärtete Zähne oder dergleichen umfassen. Soweit entspricht der Hinterschnittdübel 1 den aus dem Stand der Technik bekannten Hinterschnittsystemen.

Gemäss der Erfindung besitzen die Spreizsegmente 9 konvex in Richtung des Kopf- teils 3 gekrümmt Vorderkanten 10. Wie aus Fig, 4 ersichtlich, ist die Krümmung der Vorderkanten 10 der Spreizsegmente 9 derart bemessen, dass die Kontur der Vorderkanten 10 bei vollständig radial ausgestellten Spreizsegmenten 9 im wesentlichen Abschnitte eines Kreisbogens R bilden. Der Radius r des von den Vorderkanten 10 der radial ausgestellten Spreizsegmente 9 aufgespannten Kreisbogens R entspricht dabei im wesentlichen dem Radius der kreisförmigen Kontur einer Hinterschneidung in einer Aufnahmebohrung im Übergang von der Hinterschnittfläche zu der im wesentlichen axial verlaufenden Begrenzungswandung der Hinterschneidung.

Fig. 2 zeigt eine Abwicklung der vorzugsweise als Blechstanzbiegeteil ausgebildeten Hülse 5. Dabei ist die gekrümmte Kontur der Vorderkanten 10 der durch axiale Schlitze 8 voneinander getrennten Spreizsegmente 9 deutlich erkennbar. Die Herstellung der Kontur der Spreizsegmente 9 erfolgt beispielsweise durch Stanzen des Blechteils. Der erforderliche Verlauf der Vorderkante 10 der Spreizsegmente 9 ergibt sich aus der Ellipsengleichung $x^2/a^2 + y^2/b^2 = 1$, mit a = r und b = r · sin $(\alpha)$, wobei r für den Radius der Hinterschneidung am Übergang der Hinterschnittfläche zur im wesentlichen axial verlaufenden Begrenzungswandung steht und $\alpha$ den halben Öffnungswinkel des Kopfteils 3 bezeichnet.

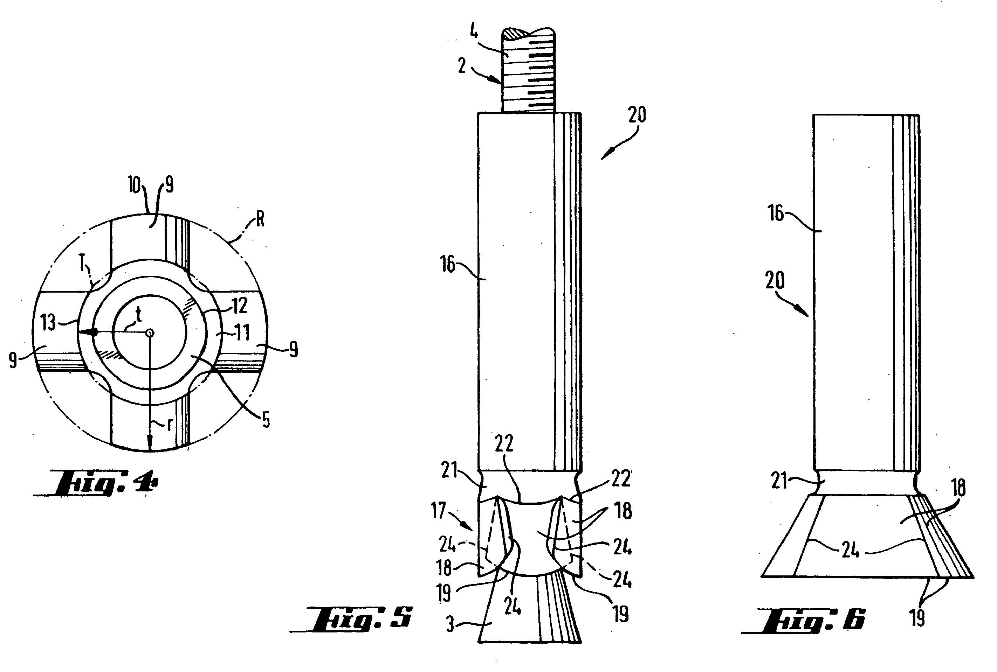

Fig. 3 zeigt die Hülse 5 mit radial ausgestellten Spreizsegmenten 9 in Seitenansicht. Auf die Darstellung der Ankerstange mit konusförmigem Kopfteil wurde aus Gründen der besseren Übersicht verzichtet. Bei vollständig radial ausgestellten Spreizsegmenten 9 bieten die konvex gekrümmt ausgebildeten Vorderkanten 10 in Seitenansicht eine geradlinige und im wesentlichen senkrecht zur Längsachse der Hülse 5 verlaufende Kontur.

Wie aus Fig. 1 bis 4 weiter ersichtlich ist, sind die Spreizsegmente 9 auch in ihrem Anbindungsbereich am plastischen Gelenk 11 dahingehend modifiziert, dass bei vollständig radial ausgestellten Spreizsegmenten 9 ihre rückwärtigen Begrenzungs- linien 13 einen Kreisbogen T (Fig. 4) bilden. Dazu ist die an die Spreizsegmente 9 angrenzende Begrenzunglinie 13 der in der Aussenfläche 6 der Hülse 5 umlaufenden Nut, die das plastische Gelenk 11 bildet, in Richtung der Längserstreckung der Spreizsegmente 9 gekrümmt ausgebildet. Für den Radius t des von der gekrümmten rückwärtigen Begrenzungslinie 13 der Spreizlappen 9 aufgespannten Kreisbogens T gilt $h \leq t \leq 1{,}25$ h, vorzugsweise $h \leq t \leq 1{,}15$ h, wobei h für den Radius des Mantels der Hülse (5; 16) steht. Die Kontur der das plastische Gelenk 11 bildenden Nut kann im Fall einer Hülse 5 als Blechstanzbiegeteil beispielsweise durch Prägen des Bleches erzeugt werden. Die zweite Begrenzungslinie 12 der umlaufenden Nut verläuft, wie in Fig. 2 dargestellt, geradlinig.

Das in Fig. 5 und 6 in Seitenansicht dargestellte zweite Ausführungsbeispiel des erfindungsgemässen Hinterschittdübels ist gesamthaft mit dem Bezugszeichen 20 versehen. Gegenüber dem ersten Ausführungsbeispiel unverändert beibehaltene Bestandteile tragen die gleichen Bezugzeichen wie in den Fig. 1 bis 4. Der dargestellte Hinterschnittdübel 20 unterscheidet sich im Spreizbereich 17 der Hülse 16 in der Form und Anordnung der Spreizlappen 18. Wie in Fig. 5 dargestellt ist, überlappen einander benachbarte Spreizlappen 18 an den Längsseiten 24. Der jeweils hinten liegende Teil eines Spreizlappens 18 ist in Fig. 5 strichliert angedeutet. Die Überlappung der Spreizlappen 18 nimmt vom plastischen Gelenk 21 zur Vorderkante 19 der Spreiz- lappen 18 zu. Dadurch wird dem Umstand Rechnung getragen, dass sich die Krümmungsradien des Kopfteils 3 zum Vorderende hin vergrössern, und dass sich daher beim Auftreiben der Hülse 16 auf das Kopfteil 3 die Längskanten 24 über ihre axiale Länge unterschiedlich weit voneinander entfernen. Durch die zur Vorderkante zunehmende Überdeckung der Längskanten 24 der benachbarten Spreizlappen 18 wird dies kompensiert. Wie aus Fig. 6 ersichtlich ist, ergibt sich bei geeigneter Wahl der Überdeckung bei vollständig radial ausgestellten Spreizlappen 18 einen geschlossenen Kegelmantel. Die Längskanten 24 liegen weitgehend spaltfrei nebeneinander. Die in der Ausgangsstellung der Hülse 16 konvex gekrümmten hinteren Begrenzungslinien 22 und die Vorderkanten 19 der Spreizsegmente 18 erscheinen in Seitenansicht als gerade Linien, die etwa senkrecht zur Achse der Hülse 16 verlaufen.

## Patentansprüche

1.   Hinterschnittdübel umfassend eine Ankerstange (2), die an ihrem einen Ende ein sich in Setzrichtung (S) konusförmig erweiterndes Kopfteil (3) und am gegenüberliegenden Ende Lastangriffsmittel (4) aufweist, und eine die Ankerstange (2) umgebende Hülse (5; 16), die an ihrem dem Kopfteil (3) zugewandten Spreizabschnitt (7; 17) mit durch axiale Schlitze (8) voneinander getrennten Spreizsegmenten (9; 18) versehen ist, die sich von einem plastischen Gelenk (11; 21) in Richtung des Kopfteils (3) erstrecken und durch eine axiale Relativverschiebung zwischen dem Kopfteil (3) und der Hülse (5; 16) radial ausstellbar sind, **dadurch gekennzeichnet, dass** die freien Vorderkanten (10; 19) der Spreizsegmente (9) in Richtung des Kopfteils (3) konvex gekrümmt ausgebildet sind, wobei die gekrümmten Vorderkanten (10; 19) im vollständig ausgestellten Zustand der Spreizsegmente (9; 18) im wesentlichen Abschnitte eines Kreisbogens (R) bilden.

2.   Hinterschnittdübel nach Anspruch 1, **dadurch gekennzeichnet, dass** der von den gekrümmten Vorderkanten (10; 19) der vollständig radial ausgestellten Spreizsegmente (9; 18) gebildete Kreisbogen (R) im wesentlichen mit der kreisförmigen Aussenkontur der Hinterschneidung übereinstimmt.

3.   Hinterschnittdübel nach Anspruch 2, **dadurch gekennzeichnet, dass** der Verlauf der gekrümmten Vorderkanten (10; 19) der Spreizlappen (9; 18) im wesentlichen der Ellipsengleichung

$$x^2/a^2 + y^2/b^2 = 1$$

entspricht, mit a = r und b = r · sin (α), wobei r für den Radius der Hinterschneidung am Übergang der Hinterschnittfläche zur im wesentlichen axial verlaufenden Begrenzungswandung steht und α den halben mittleren Öffnungswinkel des Kopfteils (3) bezeichnet.

4.   Hinterschnittdübel nach einem der vorangehenden Ansprüche, **dadurch gekennzeichnet, dass** das plastische Gelenk (11; 21) durch eine in der Aussenfläche (6) der Hülse (5; 16) umlaufende Nut gebildet ist, wobei die das rückwärtige Ende der Spreizlappen (9; 18) bildende Begrenzungslinie (13; 22) der Nut in Richtung der Spreizlappen (9; 18) derart gekrümmt ausgebildet ist, dass die Begrenzungslinien (13; 22) im vollständig ausgestellten Zustand der Spreizlappen (9; 18) einen Kreisbogen (T) bilden.

5.   Hinterschnittdübel nach Anspruch 4, **dadurch gekennzeichnet, dass** der von den rückwärtigen Enden (13; 22) der radial vollständig ausgestellten Spreiz- segmente (9; 18) gebildete Kreisbogen (T) einen Radius (t) aufweist, für den gilt h ≤ t ≤ 1,25 h, vorzugsweise h ≤ t ≤ 1,15 h, wobei h für den Radius des Mantels der Hülse (5; 16) steht.

6.   Hinterschnittdübel nach einem der vorangehenden Ansprüche, **dadurch gekennzeichnet, dass** sich benachbarte Spreizsegmente (18) im unverspreizten Ausgangszustand wenigstens über einen Teil ihrer Längserstreckung überdecken, wobei die Überdeckung ihrer Längsseiten (24) vom plastischen Gelenk (21) zu den gekrümmten Vorderkanten (19) der Spreizsegmente (18) zunimmt und bei radialer Ausstellung der Spreizsegmente (18) verringerbar ist.

7.   Hinterschnittdübel nach Anspruch 6, **dadurch gekennzeichnet, dass** die Spreizsegmente (18) in ihrer radial vollständig ausgestellten Endlage weitgehend spaltfrei aneinandergrenzen, wobei die Überdeckung benachbarter Spreizsegmente (18) aufgehoben ist.

**8.** Hinterschnittdübel nach einem der vorangehenden Ansprüche, **dadurch gekennzeichnet, dass** die Hülse (5; 16) ein Blechstanzbiegeteil ist.

**9.** Hinterschnittdübel nach einem der vorangehenden Ansprüche, **dadurch gekennzeichnet, dass** die Spreizsegmente (9; 18) mit Schneiden (15) versehen sind.

## Claims

**1.** Undercut dowel, comprising an anchor bar (2) having at its one end a head section (3) which conically expands in the setting direction (S) and at the opposite end load engaging means (4), and a sleeve (5; 16), which encases the anchor bar (2) and which is at its expansion section (7; 17) facing towards the head section (3) provided with expansion segments (9; 18) which are separated from each other by axial slots (8), said expansion segments extending from a plastic hinge (11; 21) in the direction of the head section (3) and being radially extendible by way of an axial relative displacement between the head section (3) and the sleeve (5; 16), **characterised in that** the free front edges (10; 19) of the expansion segments (9) are designed to be curved convex in the direction of the head section (3), and the curved front edges (10; 19) in the fully extended state of the expansion segments (9; 18) essentially form sections of an arc (R).

**2.** Undercut dowel according to Claim 1 **characterised in that** the arc (R) formed by the curved front edges (10; 19) of the fully radially extended expansion segments (9; 18) corresponds substantially with the circular outside contour of the undercut.

**3.** Undercut dowel according to Claim 2, **characterised in that** the course of the curved front edges (10: 19) of the expansion webs (9; 18) corresponds essentially with the ellipse equation

$$x^2/a^2 + y^2/b^2 = 1,$$

with a = r and b = r x sin (a), where r represents the radius of the undercut at the transition of the undercut surface to the essentially axially extending defining wall and a denotes half the central opening angle of the head section (3).

**4.** Undercut dowel according to one of the above claims, **characterised in that** the plastic hinge (11; 21) is formed by a peripheral groove in the outer surface (6) of the sleeve (5; 16), and the defining line (13; 22) of the groove which forms the rearward end of the expansion webs (9; 18) is in the direction of the expansion tabs (9; 18) curved in such a manner that the defining lines (13; 22) in the fully extended state of the expansion webs (9; 18) form an arc (T).

**5.** Undercut dowel according to Claim 4, **characterised in that** the arc (T) formed by the rearward ends (13; 22) of the radially fully extended expansion segments (9; 18) has a radius (t) of h ≤ t ≤ 1,25 x h, preferably h ≤ t ≤ 1.15 x h for the radius of the casing of the sleeve (5; 16).

**6.** Undercut dowel according to one of the above claims, **characterised in that** adjacent expansion segments (18) in their unexpanded initial state cover at least a portion of their longitudinal extent, and the coverage of their longitudinal sides (24) from the plastic hinge (21) to the curved front edges (19) of the expansion segments (18) increases and is reducible with radial extension of the expansion segments (18).

**7.** Undercut dowel according to Claim 6, **characterised in that** the expansion segments (18) in their radially fully extended end position are substantially gapfree relative to each other, and the coverage of adjacent expansion segments (18) is lifted.

**8.** Undercut dowel according to one of the above claims, **characterised in that** the sleeve (5; 16) is a punched sheet metal part,

**9.** Undercut dowel according to one of the above claims, **characterised in that** the expansion segments (9; 18) are provided with cutters (15).

## Revendications

**1.** Cheville à dépouille comprenant une tige d'ancrage (2), qui comporte, à l'une de ses extrémités, une partie de tête (3) s'élargissant en forme de cône dans le sens d'enfoncement (S) et, à l'extrémité opposée, des moyens d'application de charge (4), et un manchon (5 ; 16) qui entoure la tige d'ancrage (2) et qui est muni, dans sa portion expansible (7 ; 17) tournée vers la partie de tête (3), de segments expansibles (9 ; 18) qui sont séparés les uns des autres par des fentes axiales (8) et qui s'étendent en direction de la partie de tète (3) à partir d'une articulation plastique (11 ; 21) et sont déployables radialement par un déplacement axial relatif entre la partie de tête (3) et le manchon (5 ; 16), **caractérisée en ce que** les arêtes avant libres (10 ; 19) des segments expansibles (9) sont conçues avec une courbure convexe en direction de la partie de tête (3), les arêtes avant courbées (10 ; 19) formant sensiblement des portions d'un arc de cercle (R) dans la position complètement déployée des segments expansibles (9 ; 18).

2. Cheville à dépouille selon la revendication 1, **caractérisée en ce que** l'arc de cercle (R) formé par les arêtes avant courbées (10 ; 19) des segments expansibles complètement déployés radialement (9 ; 18) coïncide sensiblement avec le contour extérieur circulaire de la dépouille.

3. Cheville à dépouille selon la revendication 2, **caractérisée en ce que** le tracé des arêtes avant courbées (10 ; 19) des pattes expansibles (9 ; 18) correspond sensiblement à l'équation elliptique

$$x^2/a^2 + y^2/b^2 = 1,$$

avec a = r et b = r • sin($\alpha$), r représentant le rayon de la dépouille au niveau de 1a transition entre la surface de dépouille et la paroi de limitation sensiblement axiale, et $\alpha$ désignant la moitié de l'angle d'ouverture moyen de la partie de tête (3).

4. Cheville à dépouille selon une des revendications précédentes, **caractérisée en ce que** l'articulation plastique (11 ; 21) est formée par une rainure périphérique ménagée dans la surface extérieure (6) du manchon (5 ; 16), la ligne de limitation (13 ; 22) de la rainure qui forme l'extrémité arrière des pattes expansibles (9 ; 18) présentant une courbure telle que, dans la position complètement déployée des segments expansibles (9 ; 18), les lignes de limitation (13 ; 22) forment un arc de cercle (T).

5. Cheville à dépouille selon la revendication 4, **caractérisée en ce que** l'arc de cercle (T) formé par les extrémités arrière (13 ; 22) des segments expansibles complètement déployés radialement (9 ; 18) présente un rayon (t) pour lequel on a h $\leq$ t $\leq$ 1,25 • h, de préférence h $\leq$ t $\leq$ 1,15 • h, h correspondant au rayon de la surface périphérique du manchon (5 ; 16).

6. Cheville à dépouille selon une des revendications précédentes, **caractérisée en ce que**, en position initiale non expansée, des segments expansibles voisins (18) se chevauchent au moins sur une partie de leur extension longitudinale, le chevauchement de leurs côtés longitudinaux (24) augmentant de l'articulation plastique (21) vers les arêtes avant courbées (19) des segments expansibles (18) et pouvant diminuer en cas de déploiement radial des segments expansibles (18).

7. Cheville à dépouille selon la revendication 6, **caractérisée en ce que**, dans leur position finale complètement déployée radialement, les segments expansibles (18) sont accolés en grande partie sans interstice, le chevauchement de segments expansibles voisins (18) étant supprimé.

8. Cheville à dépouille selon une des revendications précédentes, **caractérisée en ce que** le manchon (5 ; 16) est une pièce cintrée en tôle découpée.

9. Cheville à dépouille selon une des revendications précédentes, **caractérisée en ce que** les segments expansibles (9 ; 18) sont pourvus de taillants (15).

_Fig. 1_

_Fig. 2_

_Fig. 3_

EP 0 899 468 B1

Fig. 6

Fig. 5

Fig. 4